# EUROPEAN PATENT SPECIFICATION

(11) **EP 1 158 785 B1**
(45) Date of publication and mention of the grant of the patent: **22.12.2010**
(21) Application number: 01304199.1
(22) Date of filing: 10.05.2001
(51) Int. Cl.: H04N 5/225, H04N 5/232, G06F 3/033

(54) **An image pickup apparatus and its operation method**
Bildaufnahmegerät und sein Betriebsverfahren
Un dispositif de prise d'images et son procédé de fonctionnement

(30) Priority: 18.05.2000 JP 2000146709
(43) Date of publication of application: 28.11.2001
(73) Proprietor: Sony Corporation, Tokyo 141 (JP)
(72) Inventor: Nishimura, Yoshihiko, c/o Intellectual Property Department, Shinagawa-ku, Tokyo 141 (JP)
(74) Representative: Turner, James Arthur

(56) References cited:
- US-A- 6 091 450
- PATENT ABSTRACTS OF JAPAN vol. 2000, no. 15, 6 April 2001 (2001-04-06) & JP 2000 341570 A (SONY CORP), 8 December 2000 (2000-12-08)
- PATENT ABSTRACTS OF JAPAN vol. 2000, no. 01, 31 January 2000 (2000-01-31) & JP 11 289484 A (FUJI PHOTO FILM CO LTD), 19 October 1999 (1999-10-19)
- PATENT ABSTRACTS OF JAPAN vol. 2000, no. 03, 30 March 2000 (2000-03-30) & JP 11 355617 A (FUJI PHOTO FILM CO LTD), 24 December 1999 (1999-12-24)
- PATENT ABSTRACTS OF JAPAN vol. 2000, no. 06, 22 September 2000 (2000-09-22) & JP 2000 083185 A (CANON INC), 21 March 2000 (2000-03-21)

## Description

The present invention relates to an image pickup apparatus suited like and its operation method, for use, for example for example, with a consumer video camera apparatus or the like.

Conventionally, in a video camera apparatus including both of a liquid crystal display monitor having touch panel function and an electronic viewfinder, when a user takes a picture through the electronic viewfinder, for example, a plurality of operation buttons are displayed on a finder screen together with a subject image in the form of icons . A user can select a plurality of operation buttons on this finder screen by operating a touch panel making use of a liquid crystal display monitor in a blind-touch manner.

In this case, the touch panel is such that the whole of touch pad is divided vertically into three touch-sensitive areas. For example, the right and left touch-sensitive areas are used as touch-sensitive areas in which sense a cursor's movement in the right and left direction on the finder screen. The central switch touch-sensitive area is used as a touch-sensitive area to set an operation button designated by the cursor. Therefore, when a user selects a certain operation button, the user must move a cursor to place it on a determined operation button button by pressing the central switch touch-sensitive area of the touch panel.

However, according to the above operation method, because the user the operation while he watches a subject through the electronic viewfinder, operations will be complicated. Moreover, because the user should touch the touch panel many times, it takes a lot of time to select a certain operation button. This causes also such a problem that a user may miss the crucial shooting conditions.

A prior art device having the pre-characterising features of claim 1 appended hereto is provided in JP-2000-341570

Various respective aspects and features of the invention are defined in the appended claims.

The present invention has been made to address the above problems and embodiments of the invention seek to provide an image pickup apparatus and its operation method in which complicated touch panel operations can be eliminated or at least improved and a simpler operation can be expected.

Embodiments of the present invention relate to an image pickup apparatus and its operation method in which when a user takes a picture through an electronic viewfinder, operation buttons displayed on a finder screen in the form of icons can be selected with ease using a liquid crystal display monitor as a touch pad.

An image pickup apparatus according to the present invention is provided in claim 1 appended hereto.

A method of operating an image pickup apparatus according to an aspect of the present invention is provided in claim 4 appended hereto.

According to the above image pickup apparatus and its operation method, when a user takes a picture through an electronic viewfinder, a user can select and determine respective operation buttons by blind-touching the touch panel positions corresponding to the operation button positions displayed on the finder screen in the form of icons.

Moreover, because the operation buttons are displayed in the form of icons at the four corners of the finder screen and the touch-sensitive areas which are used to selectively operate the operation buttons are provided on the touch panel at its four corners corresponding to the icon displayed positions, the touch-sensitive area positions are made clear and so a user can perform a blind-touch operation without fail, thereby allowing operability to be improved.

The invention will now be described by way of example with reference to the accompanying drawings, throughout which like parts are referred to by like references, and in which:
FIG. 1 is a perspective view of an outward appearance of a video camera apparatus in the shooting state using a liquid crystal display panel;
FIG. 2 is a perspective view of an outward appearance of a video camera apparatus in the shooting state using an electronic viewfinder;
FIG. 3 is a circuit diagram partially in block of a video camera apparatus;
FIG. 4A is a diagram showing a finder screen;
FIG. 4B is a diagram showing another finder screen; and

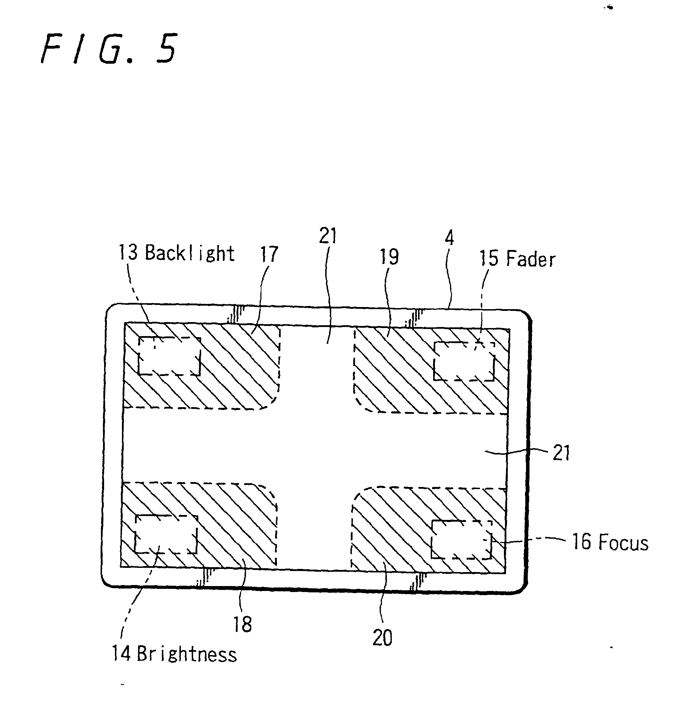

FIG. 5 is a diagram for explaining a sensitive area formed when a liquid crystal display panel is used as a touch panel.

An image pickup apparatus and its operation method according to an embodiment of the present invention will be described below with reference to the drawings, where the present invention is applied to a consumer video camera apparatus by way of example.

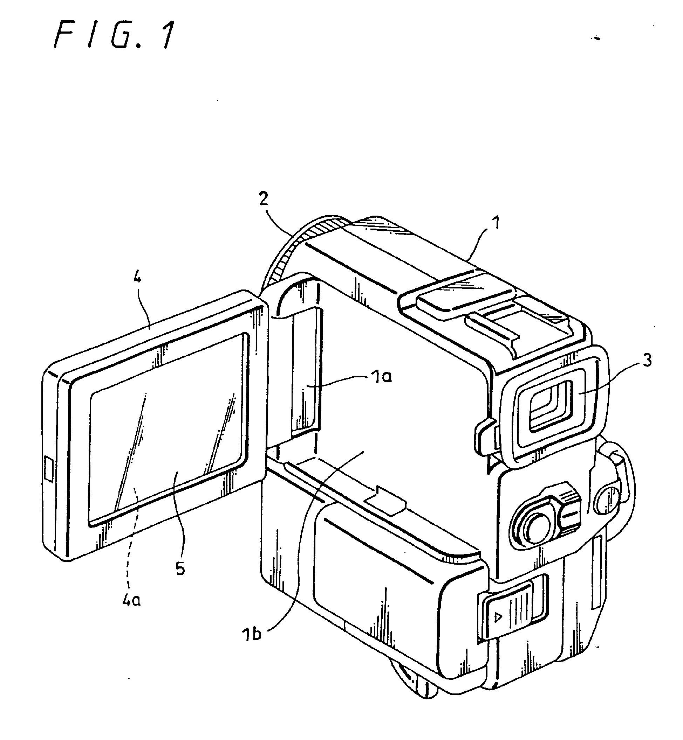

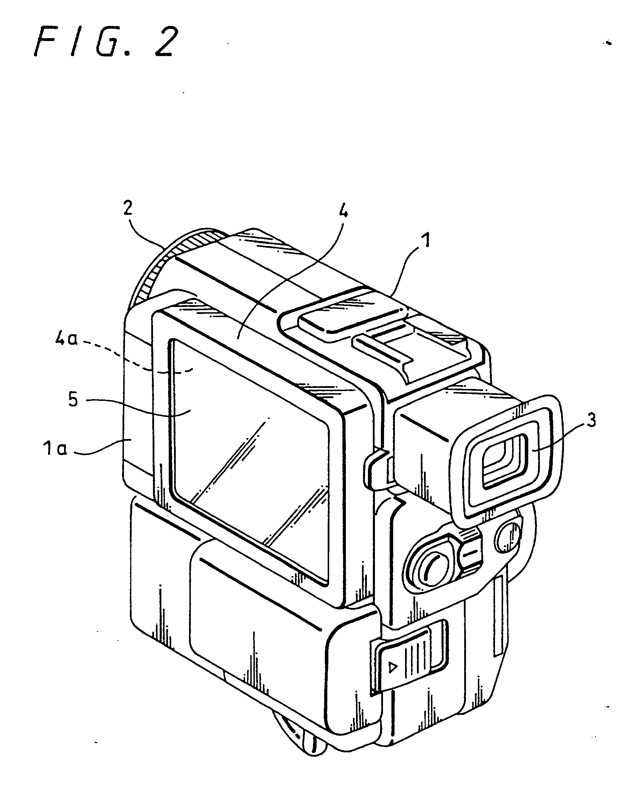

FIG. 1 is a perspective view of an outward appearance of a video camera apparatus by which a user takes a picture using a liquid crystal display monitor. FIG. 2 is a perspective view of an outward appearance of a video camera apparatus by which a user takes a picture using an electronic viewfinder.

A video camera body (apparatus) 1 incorporates therein a CCD (charge-coupled device) for converting a subject image incident from an image pickup lens 2 through an optical lens group into a video signal and a recording and playback mechanism section including a magnetic tape that can be charged and discharged as a recording medium used to record and reproduce a video signal and an audio signal picked up from a microphone. Moreover, still pictures obtained from the video signal are recorded on a stick-like recording medium.

On the other hand, the video camera body 1 has at its upper rear portion an electronic viewfinder 3 to enable a user to take a picture through an eyepiece. The video camera body 1 has on its side portion an external liquid crystal display monitor 4 including a display screen 4a. This liquid crystal display monitor 4 can be erected/turned relative to the video camera body 1 through a hinge portion 1a and can be stored in a recess 1b of the video camera body 1 to make the display screen 4a turn. A touch panel 5 over to the outside made of a transparent material is attached to the display screen 4a of the liquid crystal display monitor 4. The touch panel 5 is formed of a monitor having a built-in proximity sensor, for example.

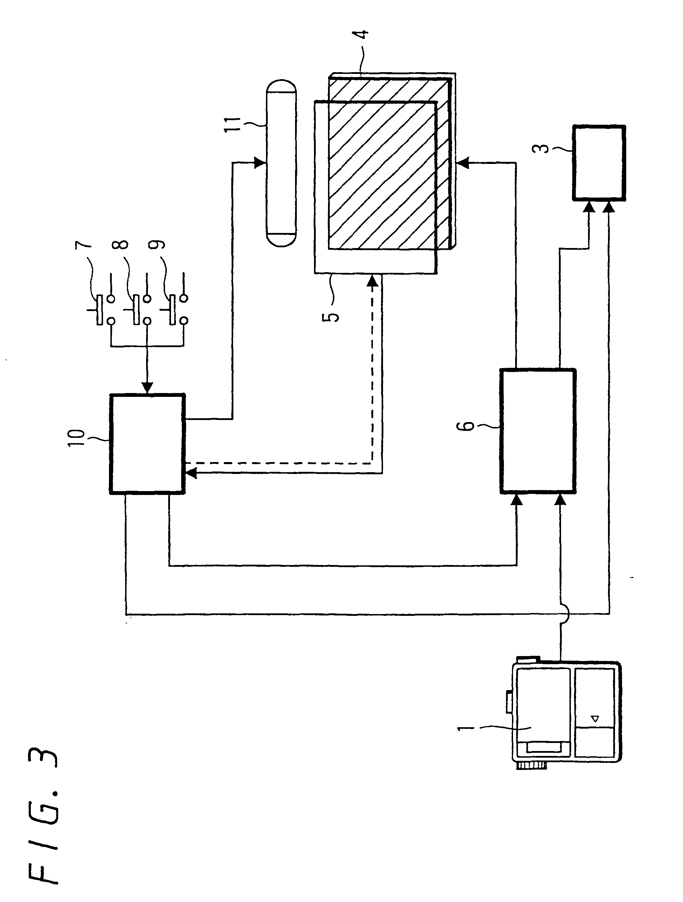

FIG. 3 is a circuit diagram partially in block of a signal system of the above video camera apparatus.

A video signal outputted from the CCD of the video camera body 1 is converted into an LCD image signal by an image display depicting IC 6 and thereby displayed on the liquid crystal display monitor as an image . The electronic viewfinder 3 includes a finder detection switch 7 for detecting the viewfinder's storage (not in use)/extract ( in use) state. The liquid crystal display monitor 4 includes a monitor open and close detection switch 8 for detecting the monitor's open/close state and a monitor reverse detection switch 9 for detecting whether the display screen 4a of the liquid crystal display monitor 4 is stored in a normal direction or in a reversed direction.

There exist eight combinations of detected states of these three detection switches 7, 8, 9. In table 1, it is shown illustrates that while the finder detection switch 7 is off, the finder is "stored"; while the finder detection switch 7 is on the viewfinder is "extracted"; while the monitor open and close detection switch 8 is off, the monitor is "closed"; while the monitor open and close detection switch 8 is on, the monitor is "opened"; while the monitor reverse detection switch 9 is being de-energized, the monitor is "stored in the normal direction"; and while the monitor reverse detection switch 9 is on, the monitor is "stored" in the reverse direction".

**[Table 1]**

| | finder detection switch (7) | monitor open and close detection switch (8) | monitor reverse detection switch (9) |
|---|---|---|---|
| first combination | stored | closed | normal direction |
| second combination | stored | closed | reverse direction |
| third combination | stored | opened | normal direction |
| fourth combination | stored | opened | reverse direction |
| fifth combination | extracted | closed | normal direction |
| sixth combination | extracted | closed | reverse direction |
| seventh combination | extracted | opened | normal direction |
| eighth combination | extracted | opened | reverse direction |

The detected states based on the combinations of the above three detection switches 7, 8, 9 are controlled by a microcomputer (hereinafter referred to as a "micon 10").

According to the first combination, because the liquid crystal display monitor 4 is stored in the normal direction and also the electronic viewfinder 3 also is stored, the backlight lamp 11 of the liquid crystal display monitor 4 is turned off and the electronic viewfinder 3 is also de-energized, i.e., the video camera apparatus is not in use.

According to the second combination, the backlight lamp 11 is turned on, the liquid crystal display monitor 4 being stored while the display screen 4a is reversed to the outside and the liquid crystal display monitor 4 being available as a monitor screen of a reproduced picture.

According to the third combination, the liquid crystal display monitor 4 is opened in the normal direction and the video camera apparatus operates in a so-called ordinary shooting mode while a user is watching an image displayed on the display screen 4a. The video camera apparatus at this time is used in such conditions as shown in FIG. 1.

According to the fourth combination, because the liquid crystal display monitor 4 is reversed toward the subject side, the video camera apparatus operates in such a shooting mode that a user takes a picture with the display screen 4a toward the subject or a user takes his own picture.

According to the fifth combination, because the liquid crystal display monitor 4 is in non-use conditions that it is stored with its display screen 4a directed toward the inside, a user can take a picture through the electronic viewfinder 3.

According to the sixth combination, there is presented such a shooting state shown in FIG. 2 that while the liquid crystal display monitor 4 is being stored with its display screen 4a directed toward the outside, a user takes a picture through the electronic viewfinder 3. In this case, although the liquid crystal display monitor 4 is not in use while the backlight lamp 11 is turned off, a user can select the operation buttons by touch-operating the touch panel 5 attached onto the liquid crystal display monitor 4.

According to the seventh combination, the video camera apparatus operates in a so-called ordinary shooting mode in which a user takes a picture while he is watching a subject picture displayed on the display screen 4a of the liquid crystal display monitor 4. In this case, while the electronic viewfinder 3 is extracted, it is de-energized for saving power.

According to the eighth combination, the video camera apparatus operates in a so-called face-to face shooting mode in which a photographer takes a picture using the electronic viewfinder 3 while allowing a photographee to look at a picture displayed on the liquid crystal display monitor 4.

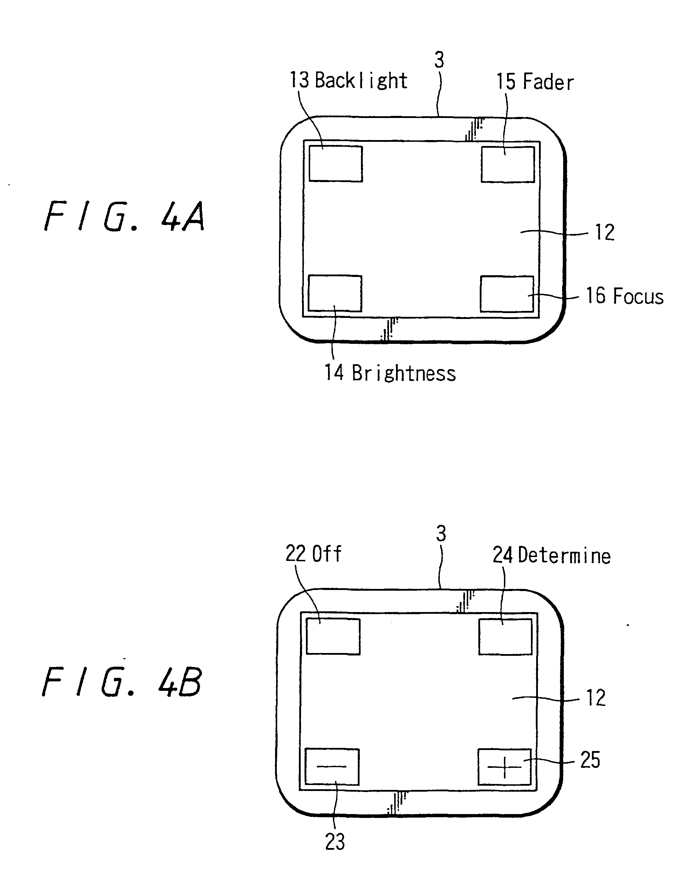

While a user takes a picture using the electronic viewfinder 3, according to the sixth combination, subject image is displayed on a finder screen 12 and also a plurality of operation buttons are displayed on the four corners of the finder screen 12 in the form of icons as shown in FIG. 4A. Specifically, an icon 13 of "backlight" is displayed on the upper left corner of the finder screen 12, an icon 14 of "brightness" being displayed on the lower left corner of the finder screen, an icon 15 of "fader" being displayed on the upper right corner of the finder screen, and an icon 16 of "focus" being displayed on the lower right corner of the finder screen.

A user is able to select the operation buttons of the respective icons 13 to 16 by touch-operating the touch panel 5 in a blind-touch manner. Touch-sensitive areas of the touch panel 5 are disposed on the touch panel 5 at its four corners corresponding to the positions of the icons 13 to 16 indicating the respective operation modes on the finder screen 12. Specifically, as to the touch-sensitive portion which is used to operate the icon 13 of "backlight" on the finder screen 12, the upper left portion of the touch panel 5 forms a touch-sensitive area 17. Similarly, as to the touch-sensitive portion which is used to operate the lower left icon 14 of "brightness", the lower left portion of the touch panel 5 forms as a touch-sensitive area 18. As to the touch-sensitive portion which is used to operate the upper right icon 15 of "fader", the upper right portion of the touch panel 5 forms a touch-sensitive area 19. As to the touch-sensitive portion which is used to operate the lower right icon 16 of "focus", the lower right portion of the touch panel 5 forms as a touch-sensitive area 20.

While the respective icon areas are located at the positions shown by imaginary lines on the finder screen 12, the respective touch-sensitive areas 17 to 20 are formed as wider areas shown by broken lines in consideration of the fact that a user touches the touch panel 5 undergoes a blind-touch operation. Other area than the touch-sensitive areas 17 to 20 forms a non-Sensitive area 21 which is inoperable even if the touch panel 5 is depressed.

Next, an example, in which a user adjusts brightness of the finder screen 12 of the electronic viewfinder 3 using the touch panel 5 will be described.

A pulse signal is supplied from the micon 10 to the touch panel 5,so that the touch panel is made operable by touching. While a user takes a picture using the electronic viewfinder 3, the four icons 13 to 16 of operation buttons are displayed on the four corners of the finder screen 12 as shown in FIG. 4A. In order to operate the icon 14 of "brightness" displayed on the lower left portion of the finder screen 12, a user should touch the touch-sensitive area 18 on the lower left portion of the touch panel 5 in a blind-touch manner. As a result, the detected signal obtained when the icon 14 of "brightness" is operated is outputted from the touch panel 5 to the micon 10. Then, depicting signal from the micon 10 is converted into an image signal by the image display depicting IC 6, whereby icons 22 to 25 of four operation buttons are displayed on the four corners of the finder screen 12 as shown in FIG. 4B.

When lowering brightness the finder screen 12, a user should touch the touch panel 5 at its lower left touch-sensitive area 18 corresponding to the "-"on 23. When raising brightness of the finder screen, a user should touch the touch panel 5 at its lower right touch-sensitive area 20 corresponding to the "+" icon 25. After brightness has been adjusted, a user should touch the touch panel 5 at its upper right touch-sensitive area 24 corresponding to the "determine" icon 24. These detected signals issued when the touch panel 5 undergoes touch operation are outputted to the micon 10. Then, a depicting signal from the micon 10 is converted into an image signal by the image display depicting IC 6, whereby brightness of the finder screen 12 is controlled and the adjustment operation is completed.

As described above, according to the present invention, because a user can operate the operation buttons displayed on the four corners of the finder screen 12 in the form of icons by blind-touching the touch-sensitive areas displayed on the touch panel 5 at its four corners corresponding to the positions of these operation buttons, the touch positions of the touch panel 5 will be distinct and so a user can perform the blind touch operation, which leads to operability improvement.

Moreover, because the number of times when a user operates the operation buttons by using the touch panel can considerably be reduced as compared with previous one by minimizing the number of the operation buttons displayed on the finder screen 12, complicated operations can be eliminated and operability can be improved.

The present invention is not limited to the embodiment described above and illustrated in the drawings, and various modifications can be made without departing from the gist of the invention.

The operation buttons displayed on the four corners of the finder screen 12 in the form of the icons are not limited to the above kinds of operation buttons and may be such operation buttons that are used to determine other operation modes.

Having described the case where four operation buttons are displayed on the four corners of the finder screen 12 in the form of icons and a user touch-operates the touch panel at its four corners corresponding to the positions of these operation buttons, the number of operation buttons is not limited so long as a user can touch-operate positions of the touch-sensitive areas touch panel corresponding to the positions of the operation buttons.

Further, having described the embodiment in which the present invention is applied to the consumer video camera apparatus, the present invention is not limited thereto and can widely be applied to business video camera apparatus.

As set forth above, the image pickup apparatus according to the present invention comprises: the electronic viewfinder provided on the body of the image apparatus to enable a user to watch a shooting subject image through the eyepiece; the liquid crystal display monitor provided outside of the body of the image pickup apparatus and having the touch panel provided on the display screen; the icon display means in which a plurality of operation buttons are displayed at the predetermined positions of the finder screen in the form of the icons in the set state in which the liquid crystal display monitor reverses its display screen to the surface side and is stored in the body of image pickup apparatus when a user takes a picture through the electronic viewfinder; and the touch panel operation means in which the touch panel positions corresponding to the operation button positions displayed on the finder screen in the form of the icons can be touch-operated by a user as the touch-sensitive areas of the operation buttons. Therefore, the touch operations in the touch panel become clear so that a user can touch-operate the touch panel without fail, which makes the image pickup apparatus highly reliable.

Because the operation buttons are displayed on the four corners of the finder screen in the form of icons and the touch-sensitive areas which are used to selectively operate the operation buttons are provided on the liquid crystal display monitor at the four corners of the touch panel corresponding to the icon display positions, the touch positions on the touch panel become clear so that a user can operate the touch panel in a blind-touch manner, thereby allowing its operability to be improved. Further, by minimizing the number of operation buttons, it is possible to considerably reduce the number of times when a user operates the buttons using the touch panel as compared with the previous art.

Moreover, according to the operation method of the image pickup apparatus by the present invention, because a plurality of operation modes are displayed at the predetermined positions of the screen in the form of the icons and a user can selectively operate the operation buttons by touch-operating the touch panel positions corresponding to the icon display positions on the finder screen, when a user takes a picture through the electronic viewfinder, the user can select and decide the respective operation buttons by blind-touching the touch panel positions corresponding to the positions of the operationbuttons displayed on the finder screen in the form of icons. Therefore, complicated operations will be eliminated and operability can be improved.

Having described preferred embodiments of the present invention with reference to the accompanying drawings, it is to be understood that the present invention is not limited to the above-mentioned embodiments and that various changes and modifications can be effected therein by one skilled in the art without departing from the scope of the present invention as defined in the appended claims. In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An image pickup apparatus comprising:
a body (1) of the image pickup apparatus incorporating therein a solid-state image pickup element for converting a subject object image incident thereon through an optical lens group into a video signal and a recording and playback mechanism section for recording and reproducing a video signal as well as an audio signal picked up from a microphone;
an electronic viewfinder (3) provided on said body of the image pickup apparatus to enable a user to watch a shooting subject image through an eyepiece;
a liquid crystal display monitor (4) externally provided on said body (1) of the image pickup apparatus so that it can be erected/turned relative to said body (1) through a hinge portion (1a) and can be stored with its display screen (4a) directed to the outside within said body (1), said display screen (4a) having a touch panel (5) provided thereon; **characterised by**
icon display means (13-16) in which a plurality of operation buttons are displayed at predetermined positions on a finder screen (12) of the viewfinder while said liquid crystal display monitor (4) is set so that its display screen may be directed to the outside and stored within said body (1) of the image pickup apparatus when a user takes a picture through said electronic viewfinder (3); and
touch panel operation means in which touch panel positions corresponding to operation button positions (17-20) displayed on said finder screen (12) in the form of icons can be touch-operated by a user as touch-sensitive areas of said operation buttons, the touch-sensitive areas forming wider areas than the respective icon areas.

2. An image pickup apparatus according to claim 1, wherein said operation buttons (17-20) are displayed on four corners of said finder screen (12) in the form of icons and touch-sensitive areas for selectively operating said operation buttons (17-20) are provided on said touch panel at its four corners corresponding to said icon display positions.

3. An image pickup apparatus according to claim 1, wherein said liquid crystal display monitor (4) functions as a touch panel and a backlight of said liquid crystal display monitor is turned off when said electronic viewfinder is enabled a for a user to take a picture.

4. A method of operating an image pickup apparatus that comprises:
a body (1) of an image pickup apparatus incorporating therein a solid-state image pickup element for converting a subject image incident thereon through an optical lens group into a video signal and a recording and playback mechanism for recording and reproducing a video signal as well as an audio signal picked up from a microphone;
an electronic viewfinder (3) provided on said body of the image pickup apparatus to enable a user to watch a shooting subject image through an eyepiece; and
a liquid crystal display monitor (4) externally provided on said body (1) of the image pickup apparatus so that it can be erected/turned relative to said body (1) through a hinge portion (1a) and can be stored within said image pickup apparatus body section while its display screen (4a) is directed to the outside, said display screen having a touch panel provided thereon, the method comprising the characterising steps of:
when a user takes a picture through said electronic viewfinder, said liquid crystal display monitor reverses its display screen to the outside and is stored within said body, a plurality of operation buttons being displayed at predetermined positions (17-20) on a finder screen of the electronic viewfinder (3) in the form of icons (13-16) and a user being able to selectively operate said operation buttons by touch-operating said touch panel positions corresponding to said icon display positions on said finder screen, the touch panel positions being touch-operated as touch sensitive areas forming wider areas than the respective icon areas.

## Patentansprüche

1. Bildabtastvorrichtung, welche umfasst:
einen Körper (1) der Bildabtastvorrichtung, in welchem ein Festkörper-Bildabtastelement enthalten ist, um ein Objektbild, welches darauf über eine optische Linsengruppe einfällt, in ein Videosignal umzusetzen, und einen Aufzeichnungs- und Wiedergabemechanismus-Abschnitt, um sowohl ein Videosignal als auch ein Audiosignal, welches von einem Mikrofon aufgenommen wird, aufzuzeichnen und wiederzugeben;
einen elektronischen Sucher (3), der auf dem Körper der Bildabtastvorrichtung vorgesehen ist, um es einem Benutzer zu ermöglichen, ein aufnehmendes Objektbild über ein Okular zu beobachten;
einen Flüssigkristall-Anzeigemonitor (4), der extern auf dem Körper (1) der Bildabtastvorrichtung vorgesehen ist, derart, dass er in Bezug auf den Körper (1) über ein Scharnierteil (1a) aufgerichtet/gedreht werden kann, und mit seinem Anzeigebildschirm (4a), der zur Außenseite gerichtet ist, innerhalb des Körpers (1) aufbewahrt werden kann, wobei der Anzeigebildschirm (4a) ein Berührungsfeld (5), welches darauf vorgesehen ist, hat, **gekennzeichnet durch**
eine Icon-Anzeigeeinrichtung (13-16), in welcher mehrere Betätigungstasten bei vorher festgelegten Positionen auf einem Sucherbildschirm (12) des Suchers angezeigt werden, während der Flüssigkristall-Anzeigemonitor (4) derart eingestellt ist, dass dessen Bildschirm zur Außenseite gerichtet werden kann und innerhalb des Körpers (1) der Bildabtastvorrichtung aufbewahrt werden kann, wenn ein Benutzer ein Bild über den elektronischen Sucher (3) aufnimmt; und
eine Berührfeld-Betätigungseinrichtung, bei der Berührfeldpositionen entsprechend Betätigungstastenpositionen (17-20), die auf dem Sucherbildschirm (12) in Form von Icons angezeigt werden, **durch** einen Benutzer als berührungsempfindliche Bereiche der Betätigungstasten beführungs-betätigt werden können, wobei die berührungs-empfindlichen Bereiche breitere Bereiche als die entsprechenden Icon-Bereiche bilden.

2. Bildabtastvorrichtung nach Anspruch 1, wobei die Betätigungstasten (17-20) auf vier Ecken des Sucherbildschirms (12) in Form von Icons angezeigt werden, und berührungs-empfndliche Bereiche zum selektiven Betätigen der Betätigungstasten (17-20) auf dem Berührungsfeld bei dessen vier Ecken entsprechend den Icon-Anzeigepositionen vorgesehen sind.

3. Bildabtastvorrichtung nach Anspruch 1, wobei der Flüssigkristall-Anzeigemonitor (4) wie ein Berührungsfeld arbeitet, und ein Hintergrundlicht des Flüssigkristall-Anzeigemonitors ausgeschaltet wird, wenn der elektronische Sucher einen Benutzer in die Lage versetzt, ein Bild aufzunehmen.

4. Verfahren zum Betreiben einer Bildabtastvorrichtung, welche umfasst:
einen Körper (1) einer Bildabtastvorrichtung, in welchem ein Festkörper-Bildabtastelement untergebracht ist, um ein Objektbild, welches darauf fällt, über eine optische Linsengruppe in ein Videosignal umzusetzen, und einen Aufzeichnungs- und Wiedergabemechanismus zum Aufzeichnen und Wiedergeben eines Videosignals sowie eines Audiosignals, welches von einem Mikrofon aufgenommen wird;
einen elektronischen Sucher (3), der auf dem Körper der Bildabtastvorrichtung vorgesehen ist, um einen Benutzer in die Lage zu versetzen, ein aufzunehmendes Objektbild über ein Okular zu beobachten; und
einen Flüssigkristall-Anzeigemonitor (4), der extern auf dem Körper (1) der Bildabtastvorrichtung vorgesehen ist, derart, dass er in Bezug auf den Körper (1) über ein Scharnierteil (1a) aufgerichtet/gedreht werden kann und innerhalb des Bildabtastungs-Vorrichtungskörperabschnitts aufbewahrt werden kann, wenn dessen Anzeigebildschirm (4a) zur Außenseite gerichtet ist, wobei der Anzeigebildschirm ein Berührungsfeld, welches darauf vorgesehen ist, hat, wobei das Verfahren die folgenden kennzeichnenden Schritte aufweist:
wenn ein Benutzer ein Bild über den elektronischen Sucher aufnimmt, der Flüssigkristall-Anzeigemonitor seinen Anzeigebildschirm zur Außenseite umkehrt und innerhalb des Körpers aufbewahrt wird, wobei mehrere Betätigungstasten bei vorher festgelegten Positionen (17-20) auf dem Sucherbildschirm des elektronischen Suchers (3) in Form von Icons (13-16) angezeigt werden, und wobei ein Benutzer in der Lage ist, selektiv die Betätigungstasten durch Berührungsbetätigung der Berührungsbetätigungspositionen auszuwählen, welche den Icon-Anzeigepositionen auf dem Bildschirm entsprechen, wobei die Berührungsfeldpositionen als berührungsempfindliche Bereiche berührungsbetätigt werden, welche breitere Bereiche als die entsprechenden Icon-Bereiche bilden.

## Revendications

1. Appareil de prise de vue comprenant :
un boîtier (1) de l'appareil de prise de vue dans lequel sont incorporés un élément d'acquisition d'image à semi-conducteurs destiné à convertir l'image objet d'un sujet qui lui est incidente à travers un groupe de lentilles optiques en un signal vidéo et une section de mécanisme d'enregistrement et de reproduction destinée à enregistrer et à reproduire un signal vidéo de même qu'un signal audio capté à partir d'un microphone :
un viseur électronique (3) disposé sur ledit boîtier de l'appareil de prise de vue pour permettre à un utilisateur d'observer à travers un oculaire l'image d'un sujet faisant l'objet d'une prise de vue ;
un afficheur (4) à cristaux liquides disposé de manière externe sur ledit boîtier (1) de l'appareil de prise de vue de façon qu'il puisse être érigé/pivoté par rapport audit boîtier (1) an moyen d'une partie (1a) formant charnière et qu'il puisse être logé, dans ledit boîtier (1), avec son écran (4a) d'affichage dirigé vers l'extérieur, un panneau tactile (5) étant disposé sur ledit écran (4a) d'affichage ; **caractérisé :**
**par** un moyen (13 à 16) d'affichage de pictogrammes dans lequel une pluralité de boutons de mise en oeuvre sont affichés à des positions prédéterminées sur un écran (12) de viseur du viseur tandis que ledit afficheur (4) à cristaux liquides est placé de façon que son écran d'affichage soit dirigé vers l'extérieur et logé dans ledit boîtier (1) de l'appareil de prise de vue lorsqu'un utilisateur prend un cliché au moyen dudit viseur électronique (3); et
par un moyen de mise en oeuvre par panneau tactile dans lequel des positions de panneau tactile correspondant à des positions (17 à 20) de boutons de mise en oeuvre affichées sur ledit écran (12) de viseur sous la forme de pictogrammes puissent être actionnées au toucher par un utilisateur en tant que zones sensibles au toucher desdits boutons de mise en oeuvre, les zones sensibles au toucher formant des zones plus grandes que les zones respectives de pictogramme.

2. Appareil de prise de vue selon la revendication 1, dans lequel lesdits boutons (17 à 20) de mise en oeuvre sont affichés aux quatre coins dudit écran (12) de viseur sous la forme de pictogrammes et les zones sensibles au toucher destinées à actionner sélectivement lesdits boutons (17 à 20) de mise en oeuvre sont disposées sur ledit panneau tactile au niveau de ses quatre coins correspondant auxdites positions d'affichage de de pictogramme.

3. Appareil de prise de vue selon la revendication 1, dans lequel ledit afficheur (4) à cristaux liquides fonctionne comme un panneau tactile et dans lequel un éclairage par l'arrière dudit afficheur à cristaux liquides est éteint lorsque ledit viseur électronique est activé pour qu'un utilisateur prenne un cliché.

4. Procédé de mise en oeuvre d'un appareil de prise de vue qui comprend:
un boîtier (1) d'un appareil de prise de vue dans lequel sont incorporés un élément d'acquisition d'image à semi-conducteurs destiné à convertir l'image d'un sujet qui lui et incidente à travers un groupe de lentilles optiques en un signal vidéo et un mécanisme d'enregistrement et de reproduction destiné à enregistrer et à reproduire un signal vidéo de même qu'un signal audio capté à partir d'un microphone;
un viseur électronique (3) disposé sur ledit boîtier de l'appareil de prise de vue pour permettre à un utilisateur d'observer à travers un oculaire l'image d'un sujet faisant l'objet d'une prise de vue : et
un afficheur (4) à cristaux liquides disposé de manière externe sur ledit boîtier (1) de l'appareil de prise de vue de façon qu'il puisse être érigé/pivoté par rapport audit boîtier (1) au moyen d'une partie (1a) formant charnière et qu'il puisse être logé, dans ladite section de boîtier d'appareils de prise de vue, tandis que son écran (4a) d'affichage est dirigé vers l'extérieur, un panneau tactile étant disposé sur ledit écran d'affichage ; le procédé comprenant les étapes caractérisantes consistant :
lorsqu'un utilisateur prend un cliché au moyen dudit viseur électronique, en ce que ledit afficheur à cristaux liquides retourne son écran d'affichage vers l'extérieur et se loge dans ledit boîtier, une pluralité de boutons de mise en oeuvre étant affichés à des positions (17 à 20) prédéterminées sur un écran de viseur du viseur électronique (3) sous la forme de pictogrammes (13 à 16) et un utilisateur étant capable d'actionner sélectivement lesdits boutons de mise en oeuvre par une action de toucher desdites positions de panneau tactile correspondant auxdites positions d'affichage de pictogramme sur ledit écran de viseur, les positions de panneau tactile étant actionnées au toucher en tant que zones sensibles au toucher formant des zones plus grandes que les zones respectives de pictogramme.
